# EUROPÄISCHE PATENTANMELDUNG

(11) **EP 0 583 546 A1**
(43) Veröffentlichungstag der Anmeldung: **23.02.1994**
(21) Anmeldenummer: 93106034.7
(22) Anmeldetag: 14.04.1993
(51) Int. Cl.: B66F 9/075

(54) **Flurförderzeug, insbesondere fahrerloses Fahrzeug**

(30) Priorität: 14.08.1992 DE 4226936
(71) Anmelder: Jungheinrich Aktiengesellschaft, D-22047 Hamburg (DE)
(72) Erfinder: Magens, Ernst-Peter, Dipl.-Ing. Dr., W-2075 Ammersbek (DE)
(74) Vertreter: Dipl.-Ing. H. Hauck, Dipl.-Ing. E. Graalfs, Dipl.-Ing. W. Wehnert, Dr.-Ing. W. Döring, Dr.-Ing. N. Siemons

(57) **Zusammenfassung**

Flurförderzeug, insbesondere fahrerloses Fahrzeug, mit einem Chassis, das auf dem Untergrund mittels Stützrädern abgestützt ist, mindestens einem von einem Antriebsmotor angetriebenen Antriebsrad zwischen den Stützrädern, dessen Lager (40) über eine Federanordnung (50,52) am Chassis (66) höhenbeweglich abgestützt ist und dem eine Bremsvorrichtung zugeordnet ist, einem von einer Hubzylinderanordnung betätigbaren Lastaufnahmemittel und einem auf die Federanordnung wirkenden Hydraulikzylinder (58) zur Veränderung der Federvorspannung, wobei der Hydraulikzylinder doppelt wirkend und so angeordnet ist, daß er in einer ersten Wirkungsrichtung die Federvorspannung erhöht und in der zweiten Wirkungsrichtung ein Lagerbauteil (40) für das Antriebsrad (20) vom Untergrund abhebt.

## Beschreibung

Die Erfindung bezieht sich auf ein Flurförderzeug, insbesondere fahrerloses Fahrzeug nach dem Oberbegriff des Patentanspruchs 1.

Flurförderzeuge stützen sich aus naheliegenden Gründen in der Regel auf ungefederten Rädern oder Rollen ab. Sie sind über mindestens ein Antriebsrad angetrieben, das außerdem Lenk- und Bremsfunktion übernimmt. In bestimmten Ausführungsformen ist das Antriebsrad zwischen den Stützrollen angeordnet. Zur Erzeugung und Aufrechterhaltung einer ausreichenden Bodenhaftung wird das Antriebsrad mit federnder Vorspannung gegen den Untergrund gedrückt. Aus EP-A-0 209 502 B1 ist bekannt geworden, die Vorspannung am Antriebsrad lastabhängig zu machen dergestalt, daß sie mit steigender Last erhöht wird. Das Antriebsrad ist mittels einer Parallelschwinge am Chassis aufgehängt; sie wird von zwei Federn vorgespannt, wobei eine Feder in ihrer Vorspannung mit Hilfe eines hydraulischen Vorspannzylinders verändert werden kann. Der Vorspannzylinder ist direkt mit dem Hubzylinder des Förderzeugs gekoppelt. Dadurch wird erreicht, daß auch bei höherer Last ausreichende Traktionskräfte auf den Untergrund übertragen werden, was gleichzeitig für eine gute Bodenhaftung zu Abbremszwecken dient.

Werden Fahrzeuge, die mit mittig angeordneten, federnd aufgehängten Antrieben ausgerüstet sind, zur seitlichen Lastaufnahme oder -abgabe eingesetzt, so erzeugen die Reaktionskräfte der Federn am Fahrzeugrahmen ein Kippmoment um die Kippkante, das wie das Kippmoment der außerhalb der Standbasis befindlichen Last dem Standmoment entgegengerichtet ist. Dies kann nur durch eine Erhöhung der Fahrzeugeigenmassen ausgeglichen werden, was einen höheren Energiebedarf zur Folge hat, da das Fahrzeugleergewicht in Relation zur Traglast und die Radlasten der ungefederten Rädern zunehmen.

Aus der genannten Druckschrift ist daher auch bereits bekannt geworden, die Vorspannung am Antriebsrad zu reduzieren, wenn das Lastaufnahmemittel eine bestimmte Höhe erreicht hat. Dadurch wird die Kippneigung des Förderfahrzeugs verringert, was ein Ein- und Ausstapeln in größerer Höhe erleichtert. Dabei wird in Kauf genommen, daß die Traktionskraft und die Bremskraft als übertragbare Umfangskraft des Antriebsrads auf den Untergrund ebenfalls verringert wird. Dieser Nachteil kann jedoch für diesen Betriebszustand hingenommen werden, da Flurförderzeuge mit angehobener Last selten mit hohen Geschwindigkeiten fahren.

Die beschriebenen Vorkehrungen ermöglichen mithin eine optimale Radlast an den Antriebsrädern. Ihre Traktions- und Bremsfähigkeit ist auf die jeweilige Last abgestimmt, so daß ein Durchrutschen oder Blockieren der Antriebsräder vermieden wird. Die erzielbaren Anhaltewege im Bremsfall sind relativ kurz. Dabei muß unter Umständen eine erhöhte Lenkkraft bei höheren Lasten in Kauf genommen werden, soweit eine Lenkunterstützung nicht vorgesehen ist.

Bei Störungen an derartigen Flurförderzeugen, insbesondere bei fahrerlosen Transportfahrzeugen, besteht die Forderung, diese rasch und mit geringem Aufwand und einem Minimum an Hilfsmitteln aus dem Fahrkurs zu entfernen, um die Behinderung anderer Fahrzeuge zu vermeiden. Das Abschleppen gestaltet sich um so schwieriger, wenn das Antriebsrad nicht gelenkt und/oder die Bremse nicht gelöst werden kann.

Fahrerlose Transportfahrzeuge werden häufig mit zwei lenkbaren Antriebsrädern versehen. Haben die Antriebsräder eine von den Stützrollen abweichende Ausrichtung und sind, wie dies zumeist üblich ist, die Stützrollen als Schwenkrollen ausgebildet, ergibt sich insbesondere bei Fahrtrichtungswechsel eine noch höhere erforderliche Antriebskraft, beispielsweise um den Schwenkwiderstand der Stützrollen zu überwinden. Es kann dabei auch zu einem seitlichen Ausbrechen des Fahrzeugs kommen.

Der Erfindung liegt die Aufgabe zugrunde, ein Flurförderzeug, insbesondere fahrerloses Fahrzeug zu schaffen, das auch bei Ausfall von Funktionen noch einfach manipuliert werden kann.

Diese Aufgabe wird erfindungsgemäß gelöst durch die Merkmale des Patentanspruchs 1.

Bei dem erfindungsgemäßen Flurförderzeug ist ein doppelt wirkender Hydraulikzylinder vorgesehen, der bei Beaufschlagung in einer Richtung die Federvorspannung am Antriebsrad erhöht und bei Beaufschlagung in entgegengesetzter Richtung das Antriebsrad vom Untergrund abhebt. Zweckmäßigerweise ist dabei der Hydraulikzylinder so angeordnet, daß er bei Druck im oberen Zylinderraum die Federvorspannung erhöht und bei Druckbeaufschlagung des unteren Zylinderraums das Antriebsrad vom Untergrund abhebt. Es hängt jedoch letztlich von der Kinematik der Aufhängung des Antriebsrades und der Anordnung des Hydraulikzylinders ab, welcher Zylinderraum des Hydraulikzylinders mit Druck versorgt werden muß, um die gewünschte Funktion zu erhalten. In jedem Fall ist es bei dem erfindungsgemäßen Flurförderzeug jederzeit möglich, die Andruckkraft des Antriebsrades zu reduzieren oder völlig aufzuheben, um ein funktionsgestörtes Förderzeug aus dem Fahrkurs zu entfernen, beispielsweise durch Abschleppen, Verschieben oder dergleichen.

Bei einer Ausgestaltung der Erfindung sind beide Zylinderräume beidseits des Kolbens mit der Hubzylinderanordnung verbunden. Eine einseitige Verbindung des Vorspannzylinders ist, wie oben ausgeführt, bereits bekannt. Die Andruckkraft kann aus verständlichen Gründen nicht beliebig hoch sein, da zum einen eine zu starke Entlastung der Stützrollen auftreten und zum anderen der Raddruck zu groß werden würde. Es kann eine entsprechende Begrenzung mittels Anschlägen vorgenommen werden.

Es sind verschiedene konstruktive Lösungen denkbar, den doppelt wirkenden Hydraulikzylinder in gewünschter Weise anzuordnen und wirken zu lassen. Eine besteht erfindungsgemäß darin, daß der Zylinder an einem Ende am Chassis angebracht ist und seine Kolbenstange zwei Anschläge im Abstand voneinander aufweist, die Federanordnung zwischen dem höhenbeweglichen Träger des Antriebsrades und einem in der Höhe verstellbar geführten Widerlagerbauteil angeordnet ist, das sich in der oberen Position am Chassis abstützt und vom Chassis abhebt, wenn der Zylinder in der ersten Wirkungsrichtung verstellt wird und der erste Anschlag mit dem Widerlagerbauteil zusammenwirkt und der zweite Anschlag den Träger anhebt, wenn der Zylinder in die zweite Wirkungsrichtung verstellt wird. Der Träger, z.B. in Form einer Platte ist vorzugsweise als Schwinge ausgebildet, wie an sich bekannt, die um eine horizontale Achse am Chassis schwenkbar gelagert ist. Da die Schwinge im Angriffsbereich der Kolbenstange bei ihrer Bewegung einen kleinen Kreisbogen beschreibt, ist es zweckmäßig, wenn der doppelt wirkende Hydraulikzylinder entsprechend schwenkbar am Chassis angelenkt ist. Die Ebene, in der die Federn angeordnet sind, erstreckt sich vorzugsweise parallel zur vertikalen Ebene durch die Schwenkachse der Schwinge.

Ist die Hydraulikpumpe bei einer Störung am Fahrzeug noch betriebsbereit, kann das Anheben des Antriebsrads über die Hydraulikpumpe stattfinden. Zu diesem Zweck sieht eine Ausgestaltung der Erfindung vor, daß der Ausgang der Pumpe über ein Absperrventil mit dem die zweite Wirkungsrichtung bestimmenden Zylinderraum verbindbar ist. Ist indessen die Hydraulikpumpe ausgefallen, sieht eine Ausgestaltung der Erfindung vor, daß der die zweite Wirkungsrichtung bestimmende Zylinderraum mit einer Kupplung für den Anschluß einer externen Hydraulikpumpe verbunden ist. Die externe Hydraulikpumpe kann eine Handpumpe mit Tank sein.

Werden Fahrzeuge für die seitliche Lastaufnahme bzw. -abgabe eingesetzt, ist es zweckmäßig, durch geeignete Maßnahmen die Kippkante zur betreffenden Außenseite des Fahrzeugs zu verlagern. Hierfür können erfindungsgemäß hydraulische Stützen eingesetzt werden, die über ein Steuerschaltventil mit dem Ausgang der Pumpe verbindbar sind. Um die Reaktionskraft der Federvorspannung am Antriebsrad auszuschalten, sieht eine Ausgestaltung der Erfindung in diesem Zusammenhang vor, daß mit den Ausgängen des Steuerschaltventils ein Schaltventil für den doppelt wirkenden Hydraulikzylinder verbunden ist dergestalt, daß beim Absenken der Stützen das Antriebsrad angehoben wird und beim Anheben der Stützen das Antriebsrad abgesenkt wird, wenn beide Schaltventile in einer vorgegebenen Schaltposition sind. Damit im Störungsfall die beschriebenen Funktionen gleichwohl erfüllt werden können, sind sämtliche Ventile für den Hydraulikkreis manuell bedienbar.

Bei dem Einsatz von hydraulischen Stützen ist zweckmäßigerweise eine Betätigung über eine externe Pumpe auch für den hydraulischen Antrieb der Stützen vorgesehen, sollte es z.B. zu einer Funktionsstörung kommen, wenn sie gerade ausgefahren sind. Ein Abschleppen des Fahrzeugs läßt sich nur realisieren, wenn auch die Stützen angehoben werden.

Die Erfindung wird nachfolgend anhand von Zeichnungen näher erläutert.
- Fig. 1: zeigt schematisch in Draufsicht eine erste Ausführungsform eines Flurförderzeugs.
- Fig. 2: zeigt schematisch eine Draufsicht auf eine weitere Ausführungsform eines Flurförderzeugs.
- Fig. 3: zeigt eine Endansicht des Flurförderzeugs nach Fig. 2 bei seitlich abzugebender Last.
- Fig. 4: zeigt einen Schnitt durch die Darstellung nach Fig. 1 entlang der Linie 4-4.
- Fig. 5: zeigt die Frontansicht der Aufhängung des Antriebsrads nach Fig. 4 in Richtung Pfeil 5.
- Fig. 6: zeigt eine ähnliche Darstellung wie Fig. 5 in einer anderen Betriebsphase.
- Fig. 7: zeigt eine ähnliche Darstellung wie Fig. 5, jedoch in einer dritten Betriebsphase.
- Fig. 8: zeigt schematisch einen hydraulischen Schaltplan zum Betrieb beispielsweise eines Flurförderzeugs nach Fig. 1.
- Fig. 9: zeigt schematisch einen hydraulischen Schaltplan z.B. zum Betrieb eines Flurförderzeugs nach Fig. 2.
- Fig. 10: zeigt die Verteilung der auf den Boden wirkenden Kräfte von Stütz- und Antriebsrädern der Fahrzeuge nach Fig. 1 oder 2.

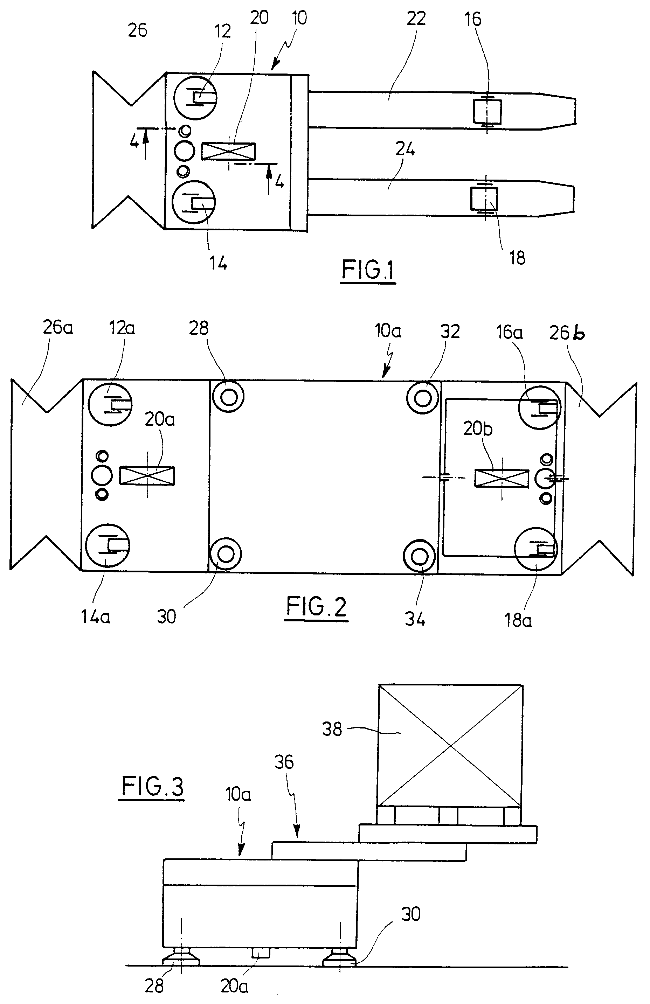

Ein fahrerloser Gabelhublader 10 gemäß Fig. 1 weist vier Stützrollen 12, 14, 16, 18 auf sowie ein dazwischenliegendes Antriebsrad 20. Die Stützrollen 12, 14 sind als Schwenkrollen ausgebildet. An dem den Gabeln 22, 24 gegenüberliegenden Ende ist ein Auffahrschutz 26 angeordnet.

Bei dem fahrerlosen Fahrzeug 10a nach Fig. 2 sind ebenfalls vier Stützrollen 12a, 14a, 16a und 18a vorgesehen, die alle als Schwenkrollen ausgeführt sind. In den Endbereichen sind mittig zwei Antriebsräder 20a und 20b vorgesehen. An den gegenüberliegenden Enden ist ein Auffahrschutz 26a bzw. 26b vorgesehen. Insoweit handelt es sich um ein konventionelles Flurförderzeug. Das Fahrzeug 10a nach Fig. 2 enthält außerdem auf jeder Außenseite hydraulische Stützen 28, 30, 32, 34. Wie aus Fig. 3 hervorgeht, kann das Lastaufnahmemittel 36 des Fahrzeugs 10a eine Last 38 auch zur Seite hin überkragend verfahren. Zur besseren Stabilisierung des Fahrzeugs 10a sind die Hydraulikstützen 28 bis 34 ausgefahren, so daß die Kippkante des Fahrzeugs 10a auf der Außenseite liegt. Die Antriebsräder 20a, 20b sind in eine angehobene Position verstellt.

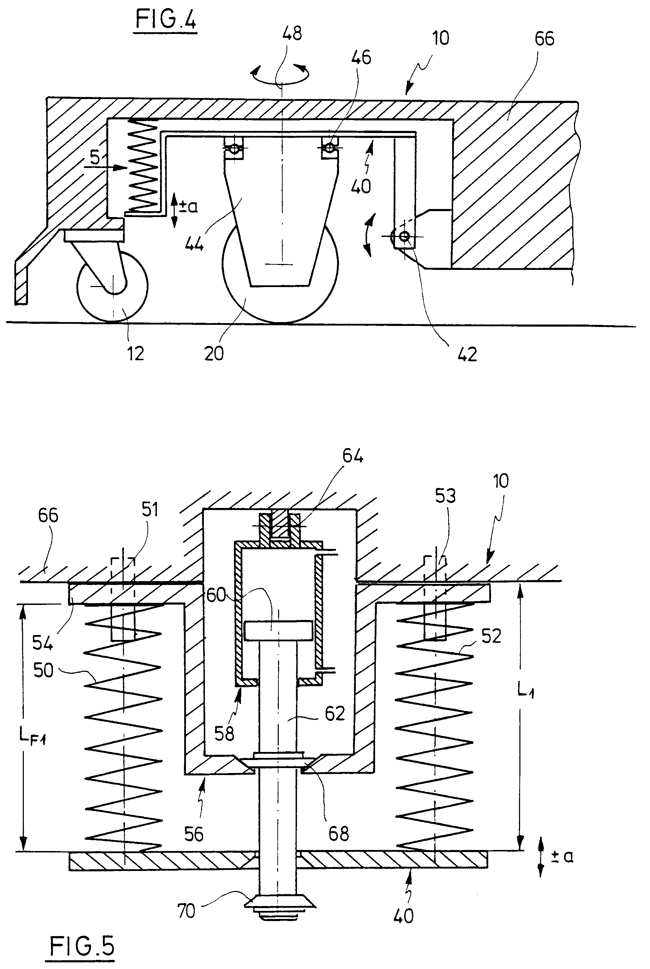

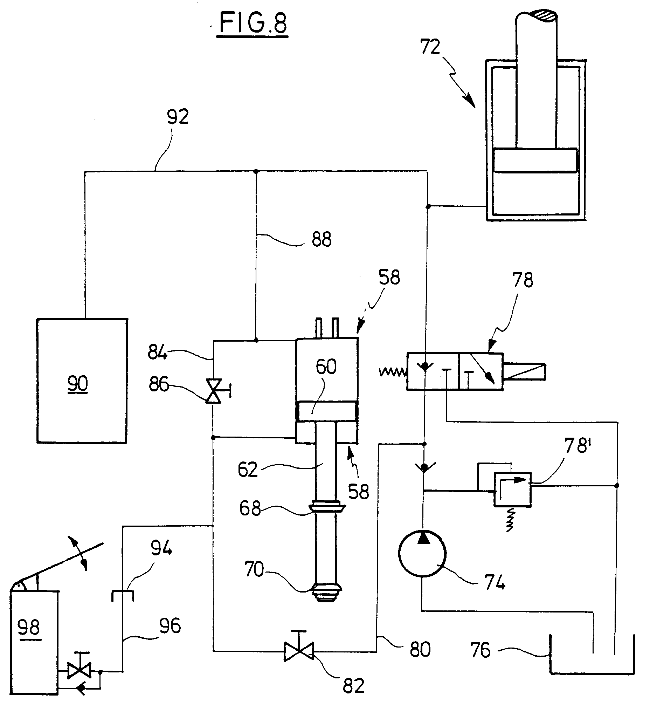

Aus Fig. 4 ist zu erkennen, daß das Antriebsrad 20 an einer Schwinge 40 angebracht ist, die bei 42 um eine horizontale Achse schwenkbar gelagert ist. Ein Radnabengetriebe 44, an dem das Antriebsrad 20 gelagert ist, ist mit Hilfe eines Rollenlagers 46 um eine vertikale Achse 48 verdrehbar. Die Verdrehung geschieht zu Lenkzwecken. Der Antrieb für das Antriebsrad 20 sowie die Bremse sind nicht dargestellt. Sie sind herkömmlich. Wie aus Fig. 5 zu erkennen, stützt sich die Schwinge 40 über zwei Federn 50, 52 an einem nach außen weisenden Flansch 54 eines durch Führungen 51, 53 am Chassis 66 geführten Widerlagerbauteils 56 ab. Das Widerlagerbauteil 56 umgibt einen doppelt wirkenden Hydraulikzylinder 58 mit Kolben 60 und Kolbenstange 62. Der Hydraulikzylinder 58 ist bei 64 schwenkbar am Chassis 66 des Fahrzeugs 10 angelenkt. Die Kolbenstange 62 durchsetzt eine Öffnung des Widerlagerbauteils 56 und weist einen ersten Anschlag 68 auf, der mit dem zugeordneten Abschnitt des Widerlagerbauteils 56 zusammenwirkt, wenn die Kolbenstange 62 nach unten bewegt wird. Die Kolbenstange 62 durchsetzt auch eine Öffnung der Schwinge 40 und hat am Ende einen zweiten Anschlag 70, der mit der Schwinge 40 zusammenwirkt, wenn die Kolbenstange 62 sich nach oben bewegt. Die Aufhängung des Antriebsrads 20 ermöglicht eine Vertikalbewegung der Schwinge 40 von ± a zur Kompensation von Bodenunebenheiten. Die Steuerung des Hydraulikzylinders 58 ist in Fig. 8 zu erkennen. In Fig. 5 liegt der Flansch 54 an der Unterseite des Chassisabschnitts 66 an, und die Federn 50, 52 haben ihre maximale Ausdehnung L_{F1}. Der Abstand der Schwinge 40 vom Chassis 66 ist mit L₁ bezeichnet.

Das Fahrzeug 10 nach Fig. 1 weist einen Hubzylinder 72 auf zum Anheben eines Lastaufnahmemittels, beispielsweise einer Gabel. Entsprechend kann das Lastaufnahmemittel 36 nach Fig. 3 durch den Hubzylinder 72 betätigt werden. Eine hydraulische motorgetriebene Pumpe 74 mit Tank 76 versorgt den Hubzylinder 72 über ein Schaltventil 78. Das Zweiwegeventil 78 ermöglicht wahlweise die Verbindung des Hubzylinders 72 mit der Pumpe 74 oder dem Tank 76. Ein Überdruckventil 78' ermöglicht eine Ableitung des Fördermediums zum Tank 76 bei zu hohem Druck. Der Ausgang der Pumpe 74 ist über eine Leitung 80 mit Absperrventil 82 mit dem unteren Zylinderraum des Zylinders 58 verbunden. Der untere Zylinderraum ist über eine Leitung 84 mit Absperrventil 86 mit dem oberen Zylinderraum verbunden, der außerdem über eine Leitung 88 mit dem Hubzylinder 72 verbunden ist. Eine federvorgespannte hydraulisch verstärkte Bremsvorrichtung 90, die elektromagnetisch gelüftet wird, ist über eine Leitung 92 mit der Leitung 88 verbunden, so daß die Vorspannung der Bremse 90 vom Druck im Hydraulikzylinder 72 abhängig ist.

Am Fahrzeug ist ein Kupplungsteil 94 vorgesehen zum Anschluß einer Leitung 96 einer Handpumpe 98. Die externe Handpumpe 98 kann wahlweise angeschlossen werden.

Nachstehend wird der Betrieb des Hydraulikzylinders 58 im Störungsfall für zwei unterschiedliche Fälle betrachtet. In dem einen Fall sind die Energieversorgung und die Hydraulikpumpe 74 betriebsbereit. Im anderen Fall sind die Pumpe 74 sowie die Energieversorgung nicht mehr betriebsbereit.

Ist die Pumpe 74 noch betriebsbereit, wird das Absperrventil 82 geöffnet, das Absperrventil 86 geschlossen, das Wegeventil 78 - elektromagnetisch - betätigt und die Pumpe 74 eingeschaltet. Dadurch senkt sich der Hubzylinder 72 und der Ringraum des Hydraulikzylinders 58 wird mit Öl versorgt. Dadurch wird der Kolben 60 bzw. die Kolbenstange 62 nach oben gefahren, wodurch sich aufgrund der Federkraft der Federn 50, 52 das Widerlagerbauteil gegen das Chassis 66 anlegen kann. Bei einem weiteren Verfahren kommt der Anschlag 70 mit der Schwinge 40 in Eingriff, so daß das Antriebsrad 20 vom Untergrund abgehoben wird.

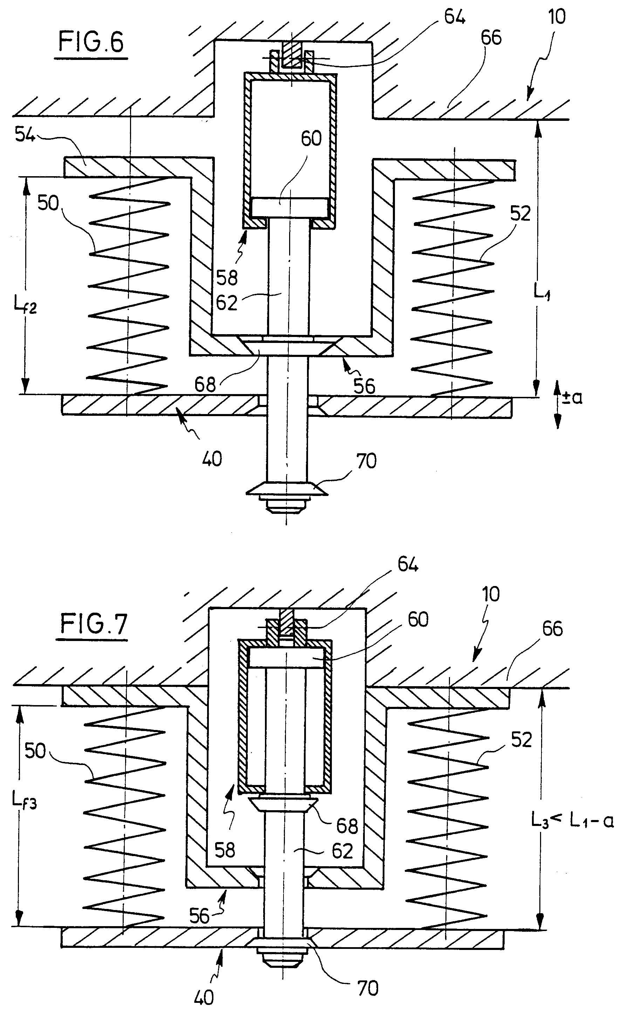

Die Maße L_{F} und L₁ verkürzen sich auf L_{F3} bzw. L₃, wenn der Kolben 60 den oberen Anschlag erreicht (siehe Fig. 7). Das Antriebsrad ist jetzt ohne Kontakt zum Boden und das Fahrzeug läßt sich frei verschieben bzw. abschleppen. Nach Schließen des Absperrventils 82 wird die Pumpe 74 abgeschaltet und das Wegeventil 78 wieder in Null-Stellung gebracht. Falls die Last beim Abschleppen auf dem Fahrzeug verbleiben soll, wird die Pumpe 74 solange eingeschaltet, bis die Transporthöhe erreicht ist.

Ist die Energieversorgung nicht mehr gegeben bzw. die Pumpe 74 nicht mehr betriebsbereit, werden die Absperrventile 82 und 86 geschlossen, das Wegeventil 78 manuell betätigt und die externe Handpumpe 98 über die Kupplung 94 angeschlossen. Dadurch wird der Hubzylinder 72 abgesenkt und durch Betätigung der Handpumpe 98 wird das Antriebsrad 20 angehoben. Ist das Antriebsrad ohne Kontakt zum Boden, kann der Abschleppvorgang beginnen, nachdem das Wegeventil 78 wieder in Null-Stellung gebracht wurde. Falls die Last beim Abschleppvorgang auf den Fahrzeug verbleiben soll, wird durch Schließen des Absperrventils 82, Neutralstellen des Wegeventils 78, Öffnen des Absperrventils 86 und Betätigen der Handpumpe 98 die Last angehoben. Sodann wird das Absperrventil 86 geschlossen, und durch Betätigen der Pumpe 98 wird die Kolbenstange 62 bis zum Anschlag eingefahren. Das aus dem Zylinder 58 verdrängte Hydraulikmedium fließt in den Hubzylinder 72, was die Last geringfügig weiter anhebt. Das Antriebsrad 20 hat keinen Kontakt mehr zum Boden, und der Abschleppvorgang kann mit gehobener Last durchgeführt werden.

Nach Beendigung des Abschleppvorgangs wird das Absperrorgan an der Handpumpe 98 geöffnet, die Kolbenstange 62 fährt aus, bis das Antriebsrad 20 wieder auf dem Boden steht. Hierbei senkt sich die Last geringfügig. Sodann wird das Absperrventil 86 geöffnet und/oder das Ventil 78, so daß durch Rückfluß des Hydraulikmediums zum Tank die Last vollständig abgesenkt werden kann.

Im Normalbetrieb ist das Wegeventil 78 nicht betätigt, die Pumpe 74 ist außer Betrieb, das Absperrventil 82 ist geschlossen, das Absperrventil 86 ist geöffnet und die Handpumpe 98 ist nicht angeschlossen. Der Hubzylinder 72 ist sowohl mit dem Ringraum als auch mit dem anderen Kolbenraum des Hydraulikzylinder 58 verbunden. Die hydraulisch unterstützte Federkraftbremse 90 ist ebenfalls mit dem Hubzylinder 72 verbunden. Bedingt durch den bei unbeladenen Fahrzeugen geringen Druck im Hubzylinder 72 tritt weder eine Verstärkung der Antriebsradlast noch des Bremsmomentes auf. Das Widerlagerbauteil 56 liegt am Chassis 66 an, und die Federn 50, 52 haben die in Fig. 5 dargestellte Einbaulänge.

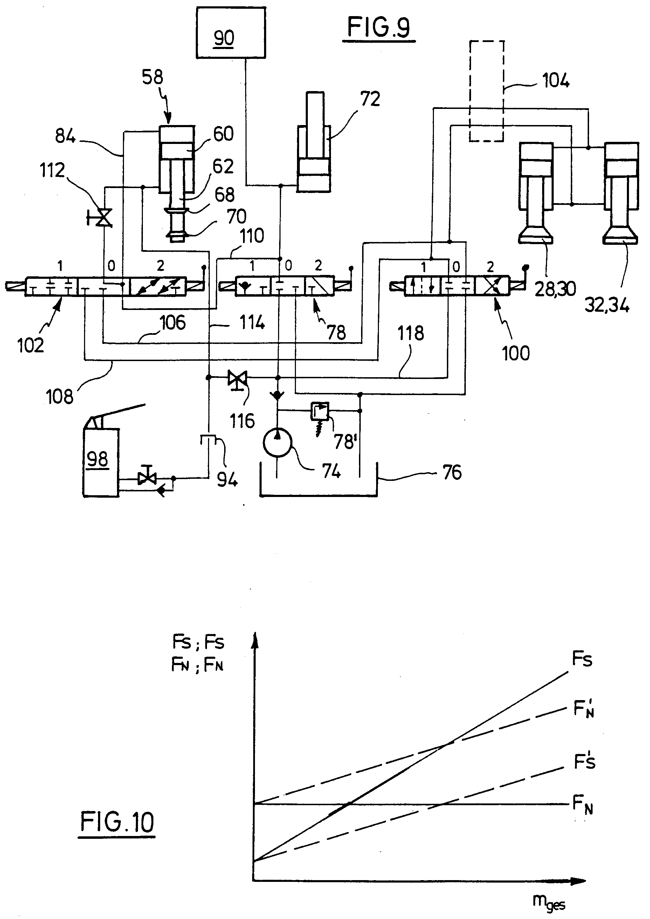

Wird eine Last aufgenommen und angehoben, ändert sich der Schaltzustand der erwähnten Armaturen nicht, mit Ausnahme der Pumpe 74, welche die Last auf einen vorgegebenen Wert anhebt. Der Druck im Hydrauliksystem steigt mit zunehmender Last. Wie erkennbar, steigt die Federvorspannung an der Schwinge 40 und damit am Antriebsrad 20 mit steigender Last. Hierdurch reduziert sich die Abhängigkeit der Radlast an den schwenkbaren Stützrollen von der Zuladung, was in Fig. 10 wiedergegeben ist. In Fig. 10 sind die Radlasten der Stützrollen einerseits und des Antriebsrades andererseits dargestellt. Mit durchgezogener Linie ist eine konstante Radlast des Antriebsrades dargestellt (F_{N}). Mit durchgezogener Linie ist die Stützlast F_{S} der Stützrollen dargestellt. Sie steigt bekanntlich mit zunehmender aufgenommener Last an. Gestrichelt sind die Last am Antriebsrad F_{N}' und die Last F_{S}' an den Stützrollen bei veränderlichem Druck dargestellt. Man erkennt, daß mit größer werdender Vorspannung am Antriebsrad bei größer werden der Last der Druck an den Stützrollen zwar mit zunehmender Last ebenfalls steigt, nicht jedoch in dem Ausmaß wie bei konstanter Radlast des Antriebsrads.

In Fig. 6 ist dargestellt, wie durch Ausfahren der Kolbenstange 62 die Vorspannung an der Schwinge 40 und damit die Radlast am Antriebsrad 20 erhöht wird. Das Widerlagerbauteil 56 bewegt sich vom Chassis 66 fort in Richtung Schwinge 40, wobei das maximale Maß begrenzt ist durch den Anschlag des Kolbens 60 im Zylinder.

Bei dem Hydraulikkreis nach Fig. 9 sind gleiche Bauteile wie bei dem Hydraulikkreis nach Fig. 8 mit gleichen Bezugszeichen versehen. Neben dem Wegeventil 78 mit den Positionen 0, 1 und 2 ist ein Wegeventil 100 sowie ein Wegeventil 102 vorgesehen. In der Position 1 des Wegeventils 100 werden die hydraulischen Stützen 28, 30 bzw. 32, 34 betätigt, wie in Verbindung mit Fig. 3 beschrieben. Dies geschieht gegebenenfalls über eine gestrichelt gezeichnete Niveauregelung 104. In der Position 2 des Wegeventils 100 können die Stützen 28 bis 34 angehoben werden. Das Wegeventil 100 ist über Leitungen 106 und 108 mit dem Eingang des Wegeventils 102 verbunden, daß ebenfalls die Positionen 0, 1 und 2 einnehmen kann. In der Position 0 wird die Zuleitung zum Hubzylinder 72 über eine Abzweigeleitung 110 über die Leitung 84 mit dem oberen Zylinderraum verbunden. Gleichzeitig ist eine Verbindung mit dem Ringraum des Zylinders 58 möglich durch Öffnen des Absperrventils 112. Die Kupplung 94 für die Handpumpe 98 ist über eine Leitung 114 direkt mit dem Ringraum verbunden. In der Position 1 des Ventils 102 ist die Leitung 110 gesperrt. In der Position 2 erfolgt eine Verbindung der Leitungen 106, 108 mit den beiden Zylinderräumen. Durch Öffnen des Absperrventils 116 erfolgt eine Verbindung der Leitung 114 mit der Pumpe 74 und der Leitung 118 zum Schaltventil 100.

Mit der in Fig. 9 dargestellten Hydraulikanlage lassen sich sowohl das Antriebsrad anheben als auch gleichzeitig die hydraulischen Stützen 28 bis 34 absenken. Dadurch wandert die Kippkante an die Fahrzeugaußenkante und das Fahrzeugleergewicht dient, ohne Reduzierung durch Federkräfte, voll zur Kompensation des Kippmomentes der seitlich verschobenen Last.

Durch Betätigung des Ventils 100 in Position 1 und Einschalten der Pumpe 78 werden die Stützen 28 bis 34 bis zum Anschlag ausgefahren. Durch Betätigung des Ventils 102 in die Position 2 wird das Antriebsrad angehoben, wobei das Absperrventil 112 geöffnet ist. Das Ventil 100 springt in Position 0 und das Ventil 102 wird in Position 1 verstellt, in der eine Absperrung des Zylinders 58 stattfindet. Nunmehr kann mit Hilfe des Ventils 78 der Hubzylinder 72 betätigt werden, um eine Last anzuheben bzw. abzusenken. Ist die Grundposition des Lastaufnahmemittels erreicht, werden durch Betätigen des Ventils 100 die Stützen 28 bis 34 eingefahren, und der Zylinder 58 fährt das Antriebsrad durch Betätigung des Ventils 102 in die Position 2 wieder gegen den Boden. Während der darauf folgenden Fahrt des Fahrzeugs befinden sich alle Ventile 100, 102 und 78 in Position 0 und es findet die oben beschriebene lastabhängige Verstärkung des Druckes des Antriebsrades am Boden und des Bremsmomentes der Bremse 90 statt.

Zum Anheben des Antriebsrades mit Hilfe der internen Pumpe 74 wird das Absperrventil 116 geöffnet und das Absperrventil 112 geschlossen. Anschließend wird die Pumpe 74 eingeschaltet. Das im Zylinder 58 verdrängte Hydraulikmedium hebt die Last über den Hubzylinder 72 etwas an. Nachdem das Antriebsrad keinen Bodenkontakt mehr hat, wird das Absperrventil 116 geschlossen und das Fahrzeug kann abgeschleppt werden. Zum Absenken des Antriebsrades wird das Absperrventil 112 geöffnet, wobei die Last geringfügig absinkt.

Bei Ausfall der Pumpe 74 kann mit Hilfe der bei 94 anzuschließenden Hilfs- oder Handpumpe 98 das Antriebsrad angehoben werden, wenn das Fahrzeug abgeschleppt werden soll. Zu diesem Zweck wird das Ventil 112 geschlossen. Das im Zylinder 58 verdrängte Hydraulikmedium gelangt in den Hubzylinder 72, der die Last geringfügig anhebt. Falls im Störfall die Stützen 28, 30 oder 32, 34 ausgefahren sind, können sie ebenfalls mit der Pumpe 98 angehoben werden. Hierzu ist das Ventil 116 zu öffnen und das Ventil 100 in Position 2 zu bringen. Ist der Vorgang beendet, ist das Ventil 116 zu schließen und das Ventil 100 in die Neutralstellung zu bringen, damit Antriebsrad und Stützen in der angehobenen Stellung verbleiben und ein einfaches Abschleppen zulassen.

## Patentansprüche

1. Flurförderzeug, insbesondere fahrerloses Fahrzeug, mit einem Chassis, das auf dem Untergrund mittels Stützrädern abgestützt ist, mindestens einem von einem Antriebsmotor angetriebenen Antriebsrad zwischen den Stützrädern, dessen Lager über eine Federanordnung am Chassis höhenbeweglich abgestützt ist und dem eine Bremsvorrichtung zugeordnet ist, einem von einer Hubzylinderanordnung betätigbaren Lastaufnahmemittel und einem auf die Federanordnung wirkenden Hydraulikzylinder zur Veränderung der Federvorspannung, dadurch gekennzeichnet, daß der Hydraulikzylinder (58) doppelt wirkend und so angeordnet ist, daß er in einer ersten Wirkungsrichtung die Federvorspannung erhöht und in der zweiten Wirkungsrichtung das Antriebsrad (20) vom Untergrund abhebt.

2. Flurförderzeug nach Anspruch 1, dadurch gekennzeichnet, daß der doppelt wirkende Hydraulikzylinder (58) so angeordnet ist, daß er bei Druckbeaufschlagung des oberen Zylinderraums die Federvorspannung erhöht und bei Druckbeaufschlagung des unteren Zylinderraums das Antriebsrad (20) vom Untergrund abhebt.

3. Flurförderzeug nach Anspruch 1 oder 2, dadurch gekennzeichnet, daß der die erste Wirkungsrichtung bestimmende Zylinderraum mit der Hubzylinderanordnung (72) verbunden ist.

4. Flurförderzeug nach Anspruch 3, dadurch gekennzeichnet, daß beide Zylinderräume beidseits des Kolbens (60) mit der Hubzylinderanordnung (72) verbindbar sind.

5. Flurförderzeug nach einem der Ansprüche 1 bis 4, dadurch gekennzeichnet, daß der Hydraulikzylinder (58) an einem Ende am Chassis (66) angebracht ist und seine Kolbenstange (62) im Abstand voneinander angeordnete Anschläge (68, 70) aufweist, die Federanordnung (50, 52) zwischen dem Lager (40) des Antriebsrads (20) und einem in der Höhe verstellbar geführten Widerlagerbauteil (56) angeordnet ist, das sich in der oberen Position am Chassis (66) abstützt und vom Chassis abhebt, wenn der Zylinder (58) in der ersten Wirkungsrichtung verstellt wird und der erste Anschlag (68) mit dem Widerlager-bauteil (56) zusammenwirkt und der zweite Anschlag (70) ein Lagerbauteil (40) des Antriebsrades (20), vorzugsweise eine Schwinge, anhebt, wenn der Zylinder (58) in die zweite Wirkungsrichtung verstellt wird.

6. Flurförderzeug nach einem der Ansprüche 1 bis 5, dadurch gekennzeichnet, daß das Antriebsrad (20) an einer Schwinge (40) abgestützt ist, die um eine horizontale Achse (42) am Chassis (66) schwenkbar gelagert ist.

7. Flurförderzeug nach einem der Ansprüche 1 bis 6, dadurch gekennzeichnet, daß die Bremsvorrichtung (90) eine Federkraftbremse aufweist, die zur Verstärkung der Bremskraft hydraulisch mit dem Hubzylinder (72) gekoppelt ist.

8. Flurförderzeug nach einem der Ansprüche 1 bis 7, dadurch gekennzeichnet, daß der Ausgang der Pumpe (74) über ein Absperrventil (82) mit dem die zweite Wirkungsrichtung bestimmenden Zylinderraum verbindbar ist.

9. Flurförderzeug nach einem der Ansprüche 1 bis 8, dadurch gekennzeichnet, daß die Zylinderräume über ein Absperrventil (86) miteinander verbindbar sind.

10. Flurförderzeug nach einem der Ansprüche 1 bis 9, dadurch gekennzeichnet, daß der die zweite Wirkungsrichtung bestimmende Zylinderraum über eine Kupplung (94) für den Anschluß einer externen Hydraulikpumpe (98) verbunden ist.

11. Flurförderzeug nach einem der Ansprüche 1 bis 10, dadurch gekennzeichnet, daß auf beiden Seiten des Fahrzeugs (10a) hydraulische Stützen (28, 30, 32, 34) angeordnet sind, die über ein Steuerventil (100) mit dem Ausgang der Pumpe (74) verbindbar sind.

12. Flurförderzeug nach einem der Ansprüche 1 bis 10 und 11, dadurch gekennzeichnet, daß mit den Ausgängen des Steuerventils (100) ein Schaltventil (102) für den doppelt wirkenden Zylinder (58) verbunden ist dergestalt, daß beim Absenken der Stützen (28 bis 34) das Antriebsrad (20) angehoben wird und beim Anheben der Stützen (28 bis 34) das Antriebsrad (20) abgesenkt wird, wenn beide Schaltventile (100, 102) in der vorgegebenen Schaltposition sind.

13. Flurförderzeug nach Anspruch 12, dadurch gekennzeichnet, daß das Schaltventil (102) des Hydraulikzylinders (58) drei Positionen aufweist, wobei es in der ersten Position die Verbindung zum Hydraulikzylinder (58) sperrt, in der zweiten Position die Verbindung mit dem Hydraulikzylinder (58) herstellt und in einer Neutralposition den die zweite Wirkungsrichtung bestimmenden Zylinderraum mit der Hubzylinderanordnung (72) verbindet.

14. Flurförderzeug nach Anspruch 10 und 11, dadurch gekennzeichnet, daß die Kupplung (94) über ein Absperrventil (116) mit den Stützzylindern (28 bis 34) verbindbar ist.
